(19) **Europäisches Patentamt European Patent Office Office européen des brevets**

(11) **EP 3 866 345 B1**

(12) **EUROPEAN PATENT SPECIFICATION**

(45) Date of publication and mention of the grant of the patent:
**20.12.2023 Bulletin 2023/51**

(21) Application number: **21153393.0**

(22) Date of filing: **26.01.2021**

(51) International Patent Classification (IPC):
**H04B 5/00** *(2006.01)*

(52) Cooperative Patent Classification (CPC):
**H04B 5/0012; H04B 5/0081**

(54) **NEAR-FIELD ELECTROMAGNETIC INDUCTION (NFEMI) ANTENNA**

ELEKTROMAGNETISCHE NAHFELD-INDUKTIONSANTENNE (NFEM)

ANTENNE À INDUCTION ÉLECTROMAGNÉTIQUE EN CHAMP PROCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.02.2020 US 202016788542**

(43) Date of publication of application:
**18.08.2021 Bulletin 2021/33**

(73) Proprietor: **NXP B.V.**
**5656 AG Eindhoven (NL)**

(72) Inventors:
• **Kerselaers, Anthony**
**Redhill, Surrey RH1 1QZ (GB)**
• **Gommé, Liesbeth**
**Redhill, Surrey RH1 1QZ (GB)**

(74) Representative: **Miles, John Richard**
**NXP SEMICONDUCTORS**
**Intellectual Property Group**
**Abbey House**
**25 Clarendon Road**
**Redhill, Surrey RH1 1QZ (GB)**

(56) References cited:
**US-A1- 2015 318 932     US-B1- 9 941 937**
**US-B2- 10 320 086**

**Description**

The present specification relates to systems, methods, apparatuses, devices, articles of manufacture and instructions for near-field electromagnetic induction communications.

BACKGROUND

US 10,320,086 B2 describes a near-field electromagnetic induction (NFEMI) antenna, including: an electric antenna including a first electrically conductive surface; a magnetic antenna including a first coil (L1) coupled to a second coil (L2); a first feeding connection coupled to one end of the first coil; a second feeding connection coupled to another end of the first coil and one end of the second coil; wherein a another end of the second coil is connected to the electrically conductive surface; and a magnetic permeable material coupled to one side of the magnetic antenna and configured to be placed between the magnetic antenna and a set of electric components.

US 2015/318932 A1 describes an electromagnetic induction wireless transceiver including: a magnetic antenna; and a signal source configured to produce a communication signal used to drive the magnetic antenna to produce electromagnetic induction fields, wherein the transceiver when connected to a first location on a body is configured to communicate with another electromagnetic induction wireless transceiver connected to a second location on the body.

US 9,941,937 B1 describes a near-field electromagnetic induction (NFEMI) antenna, including: an electric antenna having a first surface and a second surface; a magnetic antenna having a first, second and third coils; a first feeding connection coupled to one end of the first coil and the first surface; a second feeding connection coupled to another end of the first coil and coupled to one end of the second coil; wherein another end of the second coil is coupled to one end of the third coil; wherein another end of the third coil is coupled to the second surface; wherein the first, second and third coils are configured to carry a time varying current from the first and second feeding connections in a same direction; wherein the first and second coils are configured to have a first coupling coefficient; and wherein the first and third coils are configured to have a second coupling coefficient.

SUMMARY

According to an aspect, there is provided a device according to claim 1.

In one embodiment, the first surface includes the first inductive coil.

In one embodiment, the first inductive coil geometrically surrounds the second inductive coil.

In one embodiment, the first surface including the first inductive coil and the second surface including the third inductive coil are configured to form a second capacitance (Ca).

In one embodiment, the third inductive coil includes a second end; and the second end of the third inductive coil is electrically open-ended.

In one embodiment, further comprising a conductive plate; wherein the third inductive coil includes a second end; and wherein the conductive plate is coupled to the second end of the third inductive coil.

The conductive plate and the first inductive coil can increase the second capacitance (Ca).

In The second inductive coil and the third inductive coil can increase the first capacitance (C).

In one embodiment, the conductive plate is coupled to the side opposite to the one side of the first substrate.

In one embodiment, the first inductive coil and the feeding connections are configured to carry a current; and the current is based on the near-field magnetic signals.

In one embodiment, the second and third inductive coils are configured to carry a voltage; and the voltage is based on the near-field electric signals.

In one embodiment, the first, second and third inductive coils are formed in a shape of at least one of: a circle, a rectangle, a polygon, an oval, or a diamond.

In one embodiment, the capacitance (C) between the second and third inductive coils is a distributed capacitance.

In one embodiment, the capacitance (Ca) between the first and third inductive coils is a distributed capacitance.

In one embodiment, the first, second and third inductive coils each include a looped element or structure; and the looped element or structure is at least one of: helical, a planar spiral, or a three-dimensional spiral.

In one embodiment, the antenna is embedded in at least one of: a glucose sensor, a wearable device; a smart watch; a smartwatch housing, a wireless mobile device, an earbud, a hearing aid, a headphone, an activity tracker, or a heart rate monitor.

According to an embodiment, a device including a near-field electric induction (NFEI) antenna, comprising: an inductive coil (i.e. L2/314), a first feeding connection, and a second feeding connection are formed into a first surface; wherein a first end of the inductive coil is coupled to the second feeding connection; another inductive coil (i.e. L3/316) formed into a second surface; wherein a first end of the another inductive coil is galvanically coupled (i.e. at 318) to a second end of the inductive coil; wherein the inductive coil in the first surface and the another inductive coil in the second surface are configured to form a first capacitance (C); wherein the another inductive coil in the second surface and the first feeding connection in the first surface are configured to form a second capacitance (Ca); and wherein the inductive coils are configured to receive or transmit non-propagating quasi-static near-field electric induction signals.

The above discussion is not intended to represent every embodiment or every implementation within the scope of the current or future Claim sets. The Figures and Detailed Description that follow also exemplify various embodiments.

Various embodiments may be more completely understood in consideration of the following Detailed Description in connection with the accompanying Drawings.

BRIEF DESCRIPTION OF THE DRAWINGS

Figure 1A is an example single-coil near-field electromagnetic induction (NFEMI) antenna.

Figure 1B is an example near-field device including the single-coil near-field antenna, supporting circuits, and configured to receive non-propagating quasi-static near-field signals.

Figure 2A is an example dual-coil NFEMI antenna.

Figure 2B is an example near-field device including the third or fourth example dual-coil near-field antenna, supporting circuits, and configured to receive non-propagating quasi-static near-field signals.

Figure 3A is an example side view of a tri-coil antenna device.

Figure 3B is an example top view of the tri-coil antenna device.

Figure 3C is an example bottom interstitial view of the tri-coil antenna device.

Figure 3D is an example near-field device including the tri-coil antenna device.

Figure 4 is another example near-field sensor device including the tri-coil antenna device.

While the disclosure is amenable to various modifications and alternative forms, specifics thereof have been shown by way of example in the drawings and will be described in detail. It should be understood, however, that other embodiments, beyond the particular embodiments described, are possible as well.

DETAILED DESCRIPTION

Herein discussed are near-field interactions between a near-field device, perhaps on a user's body, and other conductive surfaces and/or other wireless networked devices (e.g. Internet of Things (IoT) devices) based on near-field electromagnetic induction (NFEMI), where the transmitter and receiver are coupled by both magnetic (H) and electric (E) fields. While RF wireless communication is accomplished by propagating an RF plane wave through free space, NFEMI communication utilizes non-propagating quasi-static H and E fields.

An H-field antenna (i.e. magnetic antenna) is primarily sensitive to magnetic fields and/or primarily initiates magnetic fields when driven by a current. Any E-field component from an H-field antenna is strongly reduced (e.g. -20 to -60 dB reduction, a factor of 0.1 to 0.0008 (10% to 0.08%) depending on the antenna design).

A small loop antenna is an example H-field antenna and includes a loop antenna with dimensions much smaller than the wavelength of its use. The small loop antenna does not resonate at the NFEMI carrier frequency but is instead tuned to resonance by an external reactance. In some embodiments the current in the small loop antenna has in every position of the loop the same value.

An E-field antenna (i.e. electric antenna) is primarily sensitive to electric fields and/or primarily initiates electric fields when driven by a voltage. Any H-field component from an E-field antenna is strongly reduced (e.g. -20 to -60 dB reduction, a factor of 0.1 to 0.0008 (10% to 0.08%) depending on the antenna design).

A short loaded dipole antenna is an example E-field antenna and includes a short dipole with dimensions much smaller than the NFEMI carrier frequency and in some embodiments has extra capacitance surfaces at both ends.

The quasi-static characteristic of these fields is a result of the NFEMI antenna dimensions in combination with their carrier frequencies. Most of the near-field energy is stored in the form of magnetic and electric fields, while a small amount of RF energy inevitably propagates in free space. Small antenna geometries minimize radiating waves in free space.

Some wearables, such as hearing aids and wireless earbuds, employ Near-Field Magnetic Induction (NFMI) as a wireless communication method. In NFMI wireless communication, two loosely coupled coils realize signal transfer. No radiation of radio waves takes place. A current flowing in the transmission coil generates a H-field which in turn induces a current in the receiving coil. In this way, wireless communication is accomplished. Unfortunately, H-field based NFMI systems with small antenna coils have a limited range that may be much smaller than an entire wearable user's body. Such H-field communications are sensitive to coil orientation. In the case of a hearing aid form factor, a H-field induction based system cannot cover an entire human body. However, since in hearing aids both coils are always aligned with each other, they are not influenced by the movement of the human body.

Other wearables employ Near-field Electric Induction (NFEI)) as a wireless communication method. NFEI allows electronic devices on and near a conductive surface (e.g. a human body) to exchange information through E-field coupling (e.g. at 21 MHz). NFEI is also sometimes called Body Coupled Communication (BCC). While E-field based NFEI signals can have a greater range than H-field based NFMI signals, the E-field signal strength can vary with regard to body posture and is sensitive to body movements. The body can even partially block a capacitive return path, thereby increasing E-field channel loss and reliable and robust wireless communication is not possible.

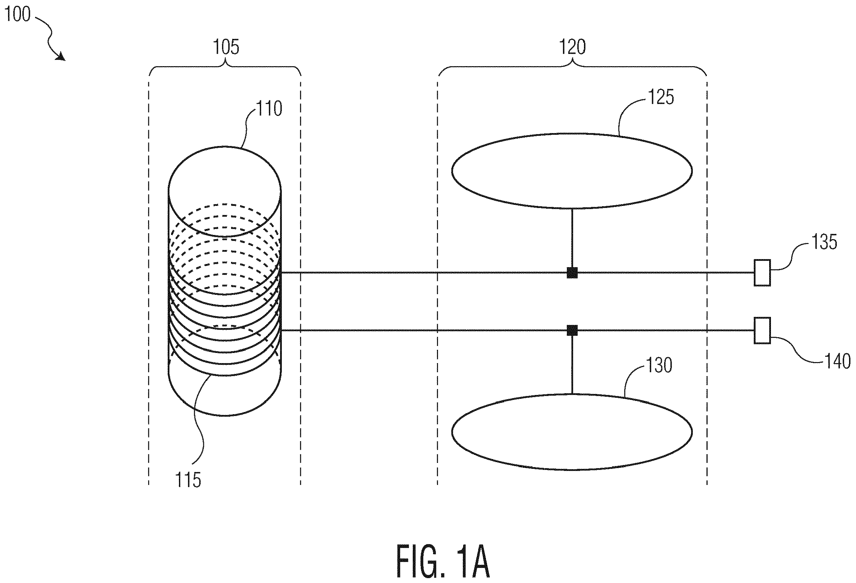

Figure 1A is an example single coil near-field electromagnetic induction (NFEMI) antenna 100. In some embodiments, the antenna 100 includes a coil (H-field) antenna 105 for magnetic fields, in conjunction with a short loaded dipole (E-field) antenna 120 for electric fields. The H-field antenna 105 includes a ferrite core 110 wound with wire 115. The E-field antenna 120 includes two conductive loading structures 125 and 130. Antenna 100 feed points 135, 140 are coupled to various transceiver circuitry, such as downstream radio transmitter and receiver integrated circuit (RF-IC), (not shown here).

When the NFEMI antenna 100 is proximate to a structure (e.g. a conductive structure, a body, a person, an object, etc.) the magnetic and electric fields will be substantially confined to the structure and not significantly radiate in free-space. This enhances security and privacy of such body networked communications.

In various embodiments, the antenna 100 operates at or below 50 MHz (e.g. for example at 30 MHz) to ensure that the fields are following the structure's contours and to ensure that far field radiation is strongly reduced.

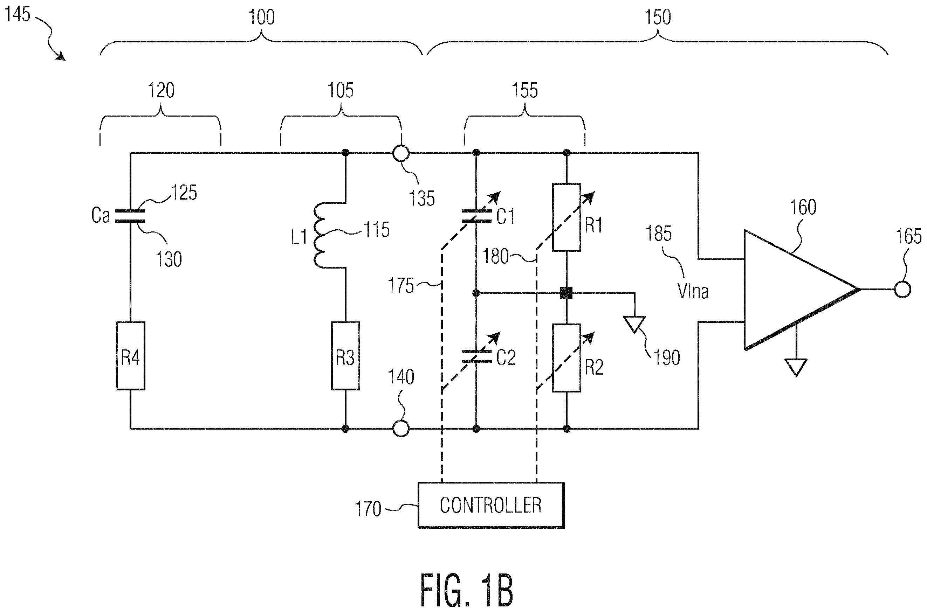

Figure 1B is an example near-field device 145 including the single coil near-field antenna 100, supporting circuits 150, and configured to receive non-propagating quasi-static near-field signals. The near-field device 145 is configured to receive (e.g. in a receive mode) a non-propagating quasi-static near-field signal. Note that the near-field antenna 100 may also be coupled to a transmitter circuit (not shown) for two-way communications.

The example idealized antenna 100 includes the magnetic (H-field) antenna 105 having a resistance (R3) and an inductance (L1), the electric (E-field) antenna 120 having a conductive structure formed from the two loading plates 125 and 130, and the two feeding points 135, 140.

The supporting circuits 150 include a tuning circuit 155, an LNA 160 (low noise amplifier), a communications signal interface 165, and a controller 170.

The tuning circuit 155 is coupled to the first and second feed points 135, 140. The tuning circuit 155 includes a first variable tuning capacitance bank (C1), a second variable tuning capacitance bank (C2), a first variable tuning resistance bank (R1), and a second variable tuning resistance bank (R2). The capacitance banks and resistance banks are coupled to a reference potential 190 (e.g. a ground potential). The capacitive banks are coupled to the controller 170 by control line 175, and the resistance banks are coupled to the controller 170 by control line 180.

The controller 170 adjusts the first and second capacitance banks (C1), (C2) to adjust a resonant frequency of the magnetic 105 and the electric 120 antennas (e.g. to 10.6 MHz). The controller 170 adjusts the first and second resistance banks (R1), (R2) to adjust a bandwidth of the magnetic 105 and the electric 120 antennas (e.g. to 400 KHz) sufficient to allow the non-propagating quasi-static near-field signal to be received from the antennas 105, 120.

The capacitance banks (C1), (C2) are equally tuned using the control line 175 from the controller 170, and the resistance banks (R1), (R2) are equally tuned using the control line 180 from the controller 170.

The LNA 160 is coupled between the tuning circuit 155 and a communications signal interface 165. When the near-field device 145 is receiving the non-propagating quasi-static near-field signal, induced voltage 185 (Vlna) is present across the LNA 160 differential inputs. The LNA 160 amplifies the received near-field signal which is then further processed by additional radio/RFIC/baseband circuits (not shown) coupled to the communications signal interface 165. The LNA 160 is also coupled to the reference potential 190.

Since both inputs to the LNA 160 are coupled to the antennas 105, 120 the near-field device's 145 configuration is said to be balanced. The balanced circuit configuration helps reject interference signals that enter both LNA 160 input lines with the same amplitude and phase. In other examples an unbalanced device can be used.

During operation a voltage is induced in the electric (E-field) antenna 120 by a received near-field electric signal. This voltage generates a current through the E-field antenna 120. The received voltage is defined by:

$$U = Q\,\frac{c_a}{c_a + c_t}.$$

where:

U    voltage at the LNA 160 input [Volts]
Ca    electric antenna 120 equivalent capacitance
Ct    Tuning capacitance (e.g. combination of C1 and C2)
Q    quality factor of the antenna system

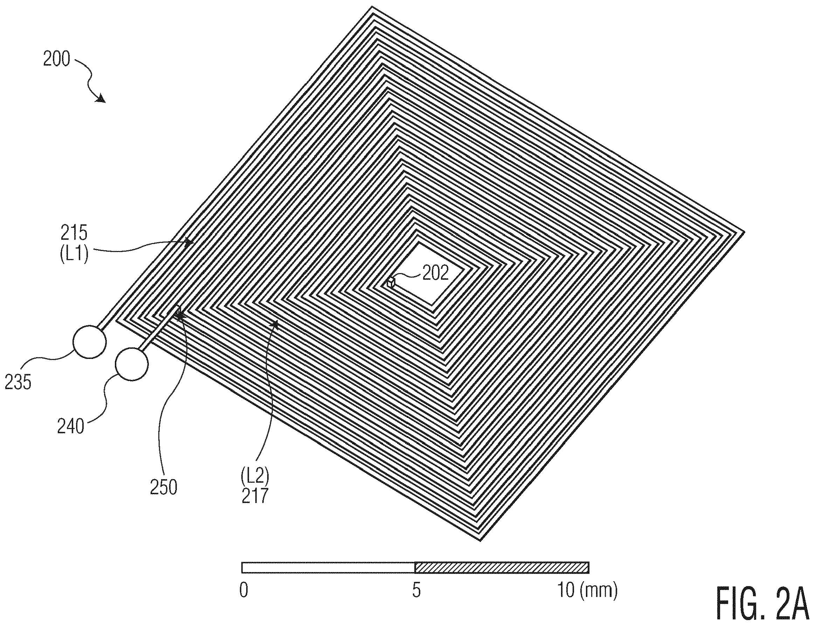

Figure 2A is an example dual-coil NFEMI antenna 200 that does not use conductive plates. The antenna 200 includes coupled coils 215 (L1) and 217 (L2), a first feeding connection 235, a second feeding connection 240, connection point 250 and an open end 202.

In this geometric configuration where the coupled coils 215 (L1) and 217 (L2) are nested (i.e. L2 is surrounded by L1) and because the magnetic antenna formed by magnetically coupled coils L1 and L2 is implemented as a planar structure (i.e. a distributed geometry) a significant amount of electric field is generated. Moreover, this antenna structure benefits from the property of the coupled coil antenna of generating a higher electric field for the same transmit voltage at feeding connections 235 and 240 compared to a single coil antenna and the property of receiving a larger voltage at feeding connections 235 and 240 for the same voltage induced in the antenna by the electric field as compared to a single coil antenna.

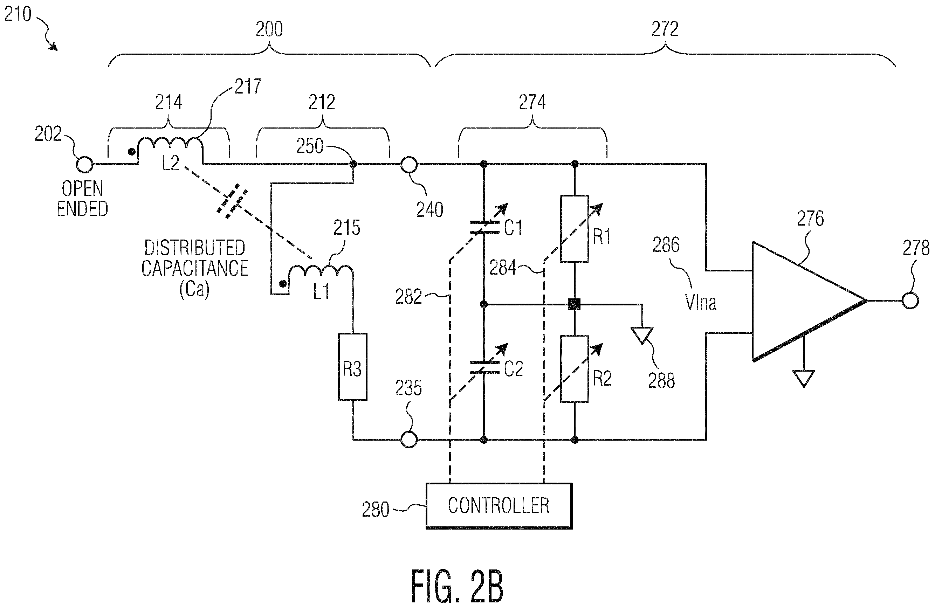

Figure 2B is an example near-field device 210 including the example dual-coil near-field antenna 200, supporting circuits 272, and configured to receive non-propagating quasi-static near-field signals.

A magnetic (H-field) antenna 212 portion includes inductance (L1) having a resistance (R3). The electric (E-field) antenna 214 portion includes inductance (L2) having the open end 202. Due to the geometry of the antenna 200, a distributed capacitance (Ca) between the inductance (L1) and inductance (L2) also exists.

The antenna 200 is similarly coupled to feeding connections 235, 240 and the supporting circuits 272 as discussed in Figure 1B.

Inductances L1 and L2 are in a series combination having a same winding direction, and thus have a same magnetic flux direction. As a result a voltage at the input of L1 is higher across L1 + L2. No conductive plates are included in the antenna 200.

Now discussed is a near-field antenna device having a physical and electrical structure that enables a set of inductive coils to have an aggregate inductance greater than a sum of their individual inductances. The near-field antenna device in some embodiments has a same communication performance as some other single-coil or dual-coil near-field devices, but instead has geometric/physical dimensions up to 50% smaller than such other single and dual coil near-field devices.

For the purposes of this discussion the following definitions are hereby provided:

In some embodiments, an "open ended" element/structure is herein defined to include an element/structure that is "not galvanically connected" to any other element/structure.

In some embodiments, a "coil" is herein defined to include a "looped" conductive element/structure, including helical, planar spiral, and three-dimensional spiral elements/structures.

In further embodiments, an "open-ended coil" is herein defined to include elements/structures where a voltage and/or electric-field is different for (e.g. is not the same or uniform throughout) various portions of the element/structure.

In some embodiments, a "conductive plate" is herein defined to include an element/structure where a voltage and/or electric-field is substantially the same throughout all portions of the element/structure.

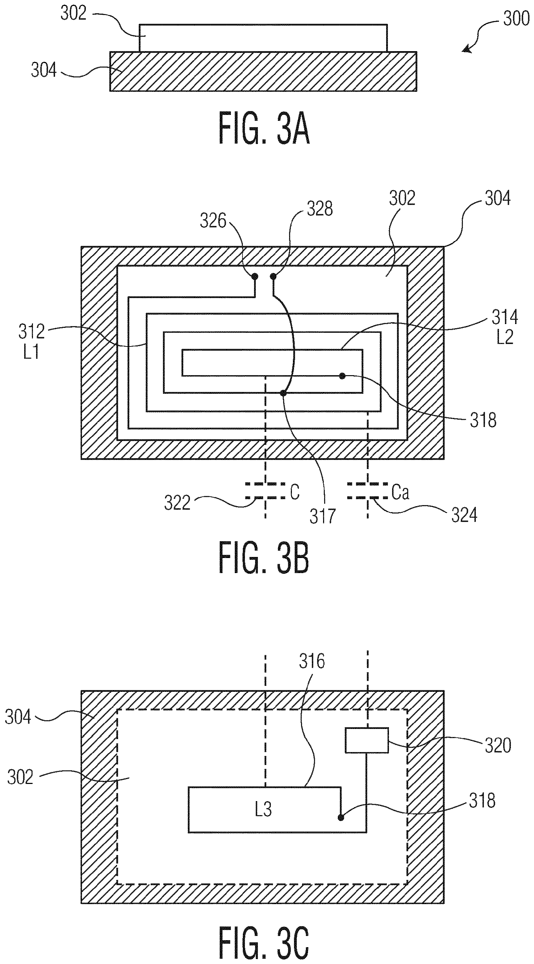

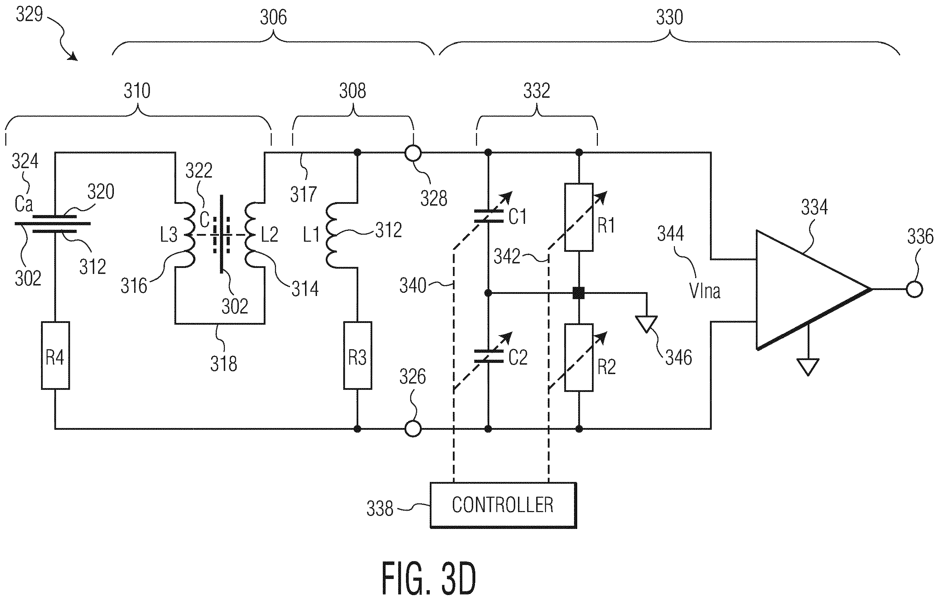

Figure 3A is an example side view of a tri-coil antenna device 300. Figure 3B is an example top view of the tri-coil antenna device 300. Figure 3C is an example bottom interstitial view of the tri-coil antenna device 300. Figure 3D is an example near-field device 329 including the tri-coil antenna device 300. Examples of the tri-coil antenna device 300 in Figures 3A, 3B, 3C, 3D are discussed together.

The tri-coil antenna device 300 of Figures 3A, 3B, 3C, 3D includes: a first substrate 302, a second substrate 304, and a near-field antenna 306 portion.

The near-field antenna 306 portion includes: a magnetic (H-field) antenna 308 having a first inductive coil 312 (e.g. a conductor segment having a first end, second end) with inductance (L1) and resistance (R3); an electric (E-field) antenna 310 having a second inductive coil 314 (e.g. conductor segment having a first end, second end) with inductance (L2) and a third inductive coil 316 (e.g. conductor segment having a first end, second end) with inductance (L3).

The second inductive coil 314 is formed into a first surface. The first surface is herein defined as a surface created by a physical shape of the second inductive coil 314. The first surface is not a surface on the first or second substrate 302, 304.

The third inductive coil 316 is formed into a second surface. The second surface is herein defined as a surface created by a physical shape of the third inductive coil 316. The second surface is not a surface on the first or second substrate 302, 304.

Also shown is a connection point 317, a galvanic connection 318 (e.g. via/galvanic short), a resistance (R4), an optional conductive loading plate 320 (not used if the third inductive coil 316 (L3) is left open ended), a first feeding connection 326, and a second feeding connection 328.

A first capacitance (C) 322 is formed between the second inductive coil 314 and the third inductive coil 316. A second capacitance (Ca) 324 is formed between either the third inductive coil 316 or the conductive loading plate 320, and either the first inductive coil 312 or the first feeding connection 326. The third inductive coil 316 (L3) and the second inductive coil 314 (L2) in some embodiments are aligned to each other to maxize the first capacitance 322 (C).

The first inductive coil 312 (L1) and the second inductive coil 314 (L2) are also magnetically coupled, where the magnetic coupling can be expressed by a first coupling factor k1. The third inductive coil 316 (L3) and the second inductive coil 314 (L2) are also magnetically and capacitively coupled, where the magnetic coupling can be expressed by a second coupling factor k2.

The first inductive coil 312 has a first end coupled to the first feeding connection 326 and a second end coupled to the second feeding connection 328. The second inductive coil 314, has a first end coupled to the second end of the first inductive coil 312 and a second end.

The second inductive coil 314 is formed into the first surface. The third inductive coil 316 formed into the second surface. The first surface including the second inductive coil 314 and the second surface including the third inductive coil 316 are configured to form the first capacitance (C) 322.

The third inductive coil 316 includes a first end galvanically coupled by the galvanic connection 318 (e.g. a via) to the second end of the second inductive coil 314. Figure 3C shows an underneath side of the first substrate 302 upon which the second surfaced formed by the third inductive coil 316 (L3) is placed.

The first inductive coil 312 is configured to receive or transmit near-field magnetic induction signals, and the second and third inductive coil 314, 316 are configured to receive or transmit near-field electric induction signals.

In various embodiments the first surface includes the first inductive coil 312 as well. The first surface including the first inductive coil 312 and the second surface including the third inductive coil 316 are configured to form the second capacitance (Ca) 324. In some embodiments the first surface the first inductive coil 312 geometrically surrounds the second inductive coil 314.

In some embodiments the second end of the third inductive coil 316 is electrically open-ended, wherein in other embodiments the second end of the third inductive coil 316 is coupled to the conductive plate 320.

The conductive plate 320 and the first inductive coil 312 are in some examples configured to increase the second capacitance (Ca) 324. Similarly in other embodiments the second inductive coil 314 and the third inductive coil 316 are configured to increase the first capacitance (C) 322. In some examples the conductive loading plate 320 can be kept small and as far as possible from the first inductive coil 312 (L1) to minimize undesirable eddy currents.

In those embodiments that include the first substrate 302 (e.g. where there is not an air gap between the first and third coils 312, 316 and/or the second and third coils 314, 316, the first and second inductive coils 312, 314 are coupled to one side of the first substrate 302 and the third inductive coil 316 is coupled to a side opposite to the one side (e.g. an opposite side) of the first substrate 302. The conductive plate 320 is also coupled to the side opposite to the one side of the first substrate 302.

The first inductive coil 312 and the feeding connections 326, 328 are configured to carry a current based on transmitted and/or received near-field magnetic signals. The second and third inductive coils 314, 316 are configured to carry a voltage based on transmitted and/or received near-field electric signals.

The first, second and third first inductive coils 312, 314, 316 (L1, L2, L3) are connected in series so as to have an aggregate inductance (L) that when a current is supplied through them a constructive magnetic and electric field is created such that the tri-coil antenna device 300 has a same communication performance as other near-field devices, but with geometric/physical dimensions 50% smaller in some embodiments. The aggregate inductance (L) is greater than a sum of the individual inductances L1, L2, L3. For example, by positioning a first surface including the second inductive coil 314 (L2) facing a second surface including the third inductive coil 316, a higher/boosted transmit mode voltage at the conductive loading plate 320 is generated for near-field electric signal transmission and reception.

In some embodiments the first and second surfaces are planar surfaces, and the first, second and third inductive coils 312, 314, 316 are formed in a shape of at least one of: a circle, a rectangle, a polygon, an oval, or a diamond. The first and second inductive coils 312, 314 sometimes also have a same winding direction and are physically juxtaposed as a set of curved parallel wires separated by a distance.

In various embodiments: the capacitance (C) 322 between the second and third inductive coils 314, 316 is a distributed capacitance, and the capacitance (Ca) 324 between the first and third inductive coils, 312, 316 is a distributed capacitance; the second and third inductive coils 316 are coupled in series; and/or the first and second inductive coils 314 are configured to have a same magnetic flux direction.

In various embodiments the first, second and third inductive coils 312, 314, 316 each include a looped element or structure, which could be at least one of: helical, a planar spiral, or a three-dimensional spiral. The first inductive coil 312 is configured to receive or transmit non-propagating quasi-static magnetic near-field signals, and the second and third inductive coils 314, 316 are configured to receive or transmit non-propagating quasi-static electric near-field signals.

The first substrate 302 in some embodiments has an electric permittivity different from air, for example a relative permittivity of 4. Electromagnetic permittivity ($\varepsilon$), is a measure of a material's electric polarizability. A material with high permittivity polarizes more in response to an applied electric field than a material with low permittivity, thereby storing more energy in the electric field. An ideal metal has infinite permittivity as such a metal would completely negate any electric field inside their bulk. The first substrate 302 can also have a thickness 0.5 mm or less.

The second substrate 304 (e.g.) may have a different permeability than air, for example a relative permeability of 150. In contrast to electromagnetic permittivity, electromagnetic permeability is the measure of the resistance of a material against the formation of a magnetic field, such materials can be used to decrease the physical size of the tri-coil antenna device 300. The second substrate 304 in some embodiments is a magnetic permeable material such as a ferrite sheet configured to shield the tri-coil antenna device 300 from the supporting circuits 330.

The example near-field device 329 of Figure 3D includes: supporting circuits 330 coupled to the first feeding connection 326 and the second feeding connection 328. The supporting circuits 330 include: a tuning circuit 332 having a first variable tuning capacitance bank (C1), a second variable tuning capacitance bank (C2), a first variable tuning resistance bank (R1), and a second variable tuning resistance bank (R2); an LNA 334 (low noise amplifier); a communications signal interface 336; a controller 338 having a control line 340 to the tuning capacitances and a control line 342 to the tuning resistances;

an induced voltage 344 (Vlna) during operation; and a reference potential 346.

The tuning circuit 332 is configured to resonate to the near-field communication frequency and set the communication bandwidth. The controller 338 tunes the resonance frequency using the variable capacitors C1 and C2. The controller 338 tunes the communication bandwidth using the variable resistors R1 and R2. In the example shown, the tuning circuit 332 is coupled to the low noise amplifier 334 when the device is in receive mode; however, for transmit mode, the tuning circuit 332 is connected a power amplifier (not shown).

The tri-coil antenna device 300 can be in various examples embedded in at least one of: a glucose sensor, a wearable device; a smart watch; a smartwatch housing, a wireless mobile device, an earbud, a hearing aid, a headphone, an activity tracker, or a heart rate monitor. Thus wearables for wireless on-body networks that require a small form factor are good candidate applications for the tri-coil antenna device 300.

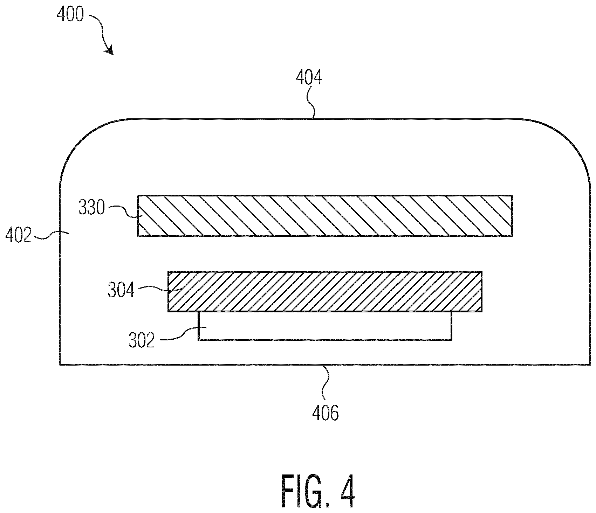

For example in a medical application the tri-coil antenna device 300 can be embedded in a glucose monitoring system that is worn on-body (e.g. see Figure 4). A glucose sensor could measure the glucose level in the blood at some position on the body and transfers this value with NFEMI to the insulin pump also worn on-body or in close proximity to the body. Both devices could be located on the upper body of the user's body.

Other applications include specialty sensors that can benefit from the small form factor of the tri-coil antenna device 300. The second substrate 304 could be at least one of: a patch, a medical patch, air, a high dielectric material, or a polyethylene foam.

In some embodiments the magnetic (H-field) antenna 308 with the first inductive coil 312 is not included. Such embodiments only use the electric (E-field) antenna 310.

Such embodiments include a near-field electric induction (NFEI) antenna 310 device comprising: an inductive coil 314 (L2), the first feeding connection 326, and the second feeding connection 328 formed into a first surface. A first end of the inductive coil 314 is coupled to the second feeding connection 328. Another inductive coil 316 (L3) is formed into a second surface. A first end of the another inductive coil 316 is galvanically coupled at 318 to a second end of the inductive coil 314. The inductive coil 314 in the first surface and the another inductive coil 316 in the second surface are configured to form the first capacitance (C) 322 and the another inductive coil 316 in the second surface and the first feeding connection 326 in the first surface are configured to form the second capacitance (Ca) 324. The inductive coils 314, 316 are configured to receive or transmit near-field electric induction signals.

Figure 4 is another example near-field sensor device 400 including the tri-coil antenna device 300. The another example near-field sensor device 400 includes a housing 402 having a top side 404 and a bottom side 406. The near-field sensor device 400 is configured to cope with the requirements for a medical sensor positioned on a human body, such as a glucose sensor that measures with regular intervals and is set for communication across the body to other devices controlling the glucose level.

Communication in some embodiments is by not only NFEMI, but also RF (e.g. Bluetooth). The sensor device 400 has a small volume to minimize the obstruction for the user which poses a problem for existing NFEMI antennas to be integrated without severe degradation of its performance. The sensor device 400 is suitable for measuring body parameters and wirelessly communicating the body parameters to another device.

The sensor device 400 has a housing 402 containing a carrier with the supporting circuits 330 required to sense body parameters and process then in the required way. The parameters and other information can be wirelessly communicated with another device close to the body. Additionally, an RF communication module and antenna may be integrated for long range communication. Wireless charging functions and other near field communication as NFC may also be included. The first substrate 302 containing the near-field antenna 306 is planar and is positioned at the bottom side 406 of the sensor device 400. The bottom side 406 is designed to be attached to a user's body. One example discloses a device including a near-field electromagnetic induction (NFEMI) antenna, including: a first inductive coil having a first end coupled to a first feeding connection and a second end coupled to a second feeding connection; a second inductive coil, having a first end coupled to the second end of the first inductive coil and a second end; wherein the second inductive coil is formed into a first surface; a third inductive coil formed into a second surface; wherein the first surface including the second inductive coil and the second surface including the third inductive coil are configured to form a first capacitance (C); wherein the third inductive coil includes a first end galvanically coupled to the second end of the second inductive coil; wherein the first inductive coil is configured to receive or transmit non-propagating quasi-static near-field magnetic induction signals; and wherein the second and third inductive coil are configured to receive or transmit non-propagating quasi-static near-field electric induction signals.

Various instructions and/or operational steps discussed in the above Figures can be executed in any order, unless a specific order is explicitly stated. Also, those skilled in the art will recognize that while some example sets of instructions/steps have been discussed, the material in this specification can be combined in a variety of ways to yield other examples as well, and are to be understood within a context provided by this detailed description.

In some embodiments these instructions/steps are implemented as functional and software instructions. In other embodiments, the instructions can be implemented either using logic gates, application specific chips, firmware, as well as other hardware forms.

When the instructions are embodied as a set of executable instructions in a non-transitory computer-readable or computer-usable media which are effected on a computer or machine programmed with and controlled by said executable instructions. Said instructions are loaded for execution on a processor (such as one or more CPUs). Said processor includes microprocessors, microcontrollers, processor modules or subsystems (including one or more microprocessors or microcontrollers), or other control or computing devices. A processor can refer to a single component or to plural components. Said computer-readable or computer-usable storage medium or media is (are) considered to be part of an article (or article of manufacture). An article or article of manufacture can refer to any manufactured single component or multiple components. The non-transitory machine or computer-usable media or mediums as defined herein excludes signals, but such media or mediums may be capable of receiving and processing information from signals and/or other transitory mediums.

It will be readily understood that the components of the embodiments as generally described herein and illustrated in the appended figures could be arranged and designed in a wide variety of different configurations. Thus, the detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The described embodiments are to be considered in all respects only as illustrative and not restrictive. The scope of the invention is, therefore, indicated by the appended claims rather than by this detailed description.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment.

**Claims**

1. A device (329) including a near-field electromagnetic induction, NFEMI, antenna (300), comprising:

   a first substrate (302);
   a first inductive coil (312) coupled to one side of the first substrate, the first inductive coil having a first end coupled to a first feeding connection (326) and a second end coupled to a second feeding connection (328);
   a second inductive coil (314) coupled to the one side of the first substrate, the second inductive coil having a first end coupled to the second end of the first inductive coil and a second end, wherein the second inductive coil is formed into a first planar surface; and
   a third inductive coil (316) coupled to a side opposite to the one side of the first substrate and formed into a second planar surface;
   wherein the first surface including the second inductive coil and the second surface including the third inductive coil are configured to form a first capacitance (322); wherein the third inductive coil includes a first end (318) galvanically coupled to the second end of the second inductive coil;
   wherein the first inductive coil is configured to receive or transmit non-propagating quasi-static near-field magnetic induction signals; and
   wherein the second and third inductive coils are configured to receive or transmit non-propagating quasi-static near-field electric induction signals.

2. The device of claim 1:
   wherein the first surface includes the first inductive coil.

3. The device of claim 2:
   wherein the first inductive coil geometrically surrounds the second inductive coil.

4. The device of any preceding claim:
   wherein the first surface including the first inductive coil and the second surface including the third inductive coil are configured to form a second capacitance (324).

5. The device of any preceding claim:

   wherein the third inductive coil includes a second end; and
   wherein the second end of the third inductive coil is electrically open-ended.

6. The device of any one of claims 1-4:

   further comprising a conductive plate (320);
   wherein the third inductive coil includes a second end; and
   wherein the conductive plate is coupled to the second end of the third inductive coil.

7. The device of claim 6:
   wherein the conductive plate is coupled to the side opposite to the one side of the first substrate.

8. The device of any preceding claim:

   wherein the first inductive coil and the feeding connections are configured to carry a current; and
   wherein the current is based on the near-field magnetic signals.

9. The device of any preceding claim:

   wherein the second and third inductive coils are configured to carry a voltage; and
   wherein the voltage is based on the near-field electric signals.

10. The device of any preceding claim:
    wherein the first, second and third inductive coils are formed in a shape of at least one of: a circle, a rectangle, a polygon, an oval, or a diamond.

**Patentansprüche**

1. Einrichtung (329) mit einer elektromagnetischen Nahfeldinduktions-, NFEMI- (Near-Field Electromagnetic Induction-), Antenne (300), umfassend:

   ein erstes Substrat (302);
   eine erste induktive Spule (312), die an eine Seite des ersten Substrats gekoppelt ist, wobei die erste induktive Spule ein erstes Ende, das an eine erste Speiseverbindung (326) gekoppelt ist, und ein zweites Ende, das an eine zweite Speiseverbindung (328) gekoppelt ist, aufweist;
   eine zweite induktive Spule (314), die an eine Seite des ersten Substrats gekoppelt ist, wobei die zweite induktive Spule ein erstes Ende, das an das zweite Ende der ersten induktiven Spule gekoppelt ist, und ein zweites Ende aufweist, wobei die zweite induktive Spule in eine erste planare Oberfläche gebildet ist; und
eine dritte induktive Spule (316), die an eine Seite gegenüber der einen Seite des ersten Substrats gekoppelt und in eine zweite planare Oberfläche gebildet ist;
wobei die erste Oberfläche mit der zweiten induktiven Spule und die zweite Oberfläche mit der dritten induktiven Spule ausgelegt sind zum Bilden einer ersten Kapazität (322);
wobei die dritte induktive Spule ein erstes Ende (318), das galvanisch an das zweite Ende der zweiten induktiven Spule gekoppelt ist, enthält;
wobei die erste induktive Spule ausgelegt ist zum Empfangen oder Übertragen von sich nicht ausbreitenden quasistatischen Nahfeld-Magnetinduktionssignalen; und
wobei die zweite und dritte induktive Spule ausgelegt sind zum Empfangen oder Übertragen von sich nicht ausbreitenden quasistatischen Nahfeld-Elektroinduktionssignalen.

2. Einrichtung nach Anspruch 1:
   wobei die erste Oberfläche die erste induktive Spule enthält.

3. Einrichtung nach Anspruch 2:
   wobei die erste induktive Spule die zweite induktive Spule geometrisch umgibt.

4. Einrichtung nach einem vorhergehenden Anspruch:
   wobei die erste Oberfläche mit der ersten induktiven Spule und die zweite Oberfläche mit der dritten induktiven Spule ausgelegt sind zum Bilden einer zweiten Kapazität (324).

5. Einrichtung nach einem vorhergehenden Anspruch:

   wobei die dritte induktive Spule ein zweites Ende enthält; und
   wobei das zweite Ende der dritten induktiven Spule elektrisch offen ist.

6. Einrichtung nach einem der Ansprüche 1-4:

   weiter umfassend eine leitfähige Platte (320);
   wobei die dritte induktive Spule ein zweites Ende enthält; und
   wobei die leitfähige Platte an das zweite Ende der dritten induktiven Spule gekoppelt ist.

7. Einrichtung nach Anspruch 6:
   wobei die leitfähige Platte an die Seite gegenüber der einen Seite des ersten Substrats gekoppelt ist.

**8.** Einrichtung nach einem vorhergehenden Anspruch:

wobei die erste induktive Spule und die Speiseverbindungen ausgelegt sind zum Führen eines Stroms; und
wobei der Strom auf den Nahfeld-Magnetsignalen basiert.

**9.** Einrichtung nach einem vorhergehenden Anspruch:

wobei die zweite und dritte induktive Spule ausgelegt sind zum Führen einer Spannung; und
wobei die Spannung auf den Nahfeld-Elektrosignalen basiert.

**10.** Einrichtung nach einem vorhergehenden Anspruch:
wobei die erste, zweite und dritte induktive Spule in einer Gestalt mindestens eines der folgenden gebildet ist: eines Kreises, eines Rechtecks, eines Polygons, eines Ovals oder einer Raute.

**Revendications**

**1.** Dispositif (329) comportant une antenne à induction électromagnétique en champ proche, NFEMI, (300) comprenant :

un premier substrat (302) ;
un première bobine inductive (312) couplée à un côté du premier substrat, la première bobine inductive ayant une première extrémité couplée à une première connexion d'alimentation (326) et une deuxième extrémité couplée à une deuxième connexion d'alimentation (328) ;
un deuxième bobine inductive (314) couplée au dit côté du premier substrat, la deuxième bobine inductive ayant une première extrémité couplée à la deuxième extrémité de la première bobine inductive et une deuxième extrémité, la deuxième bobine inductive étant formée dans une première surface plane ; et
une troisième bobine inductive (316) couplée à un côté opposé au dit côté du premier substrat et formée dans une deuxième surface plane ;
la première surface comportant la deuxième bobine inductive et la deuxième surface comportant la troisième bobine inductive étant configurées pour former une première capacité (322) ;
la troisième bobine inductive comportant une première extrémité (318) couplée galvaniquement à la deuxième extrémité de la deuxième bobine inductive ;
la première bobine inductive étant configurée pour recevoir ou émettre des signaux d'induction magnétique en champ proche quasi-statique sans propagation ; et les deuxième et troisième bobines étant configurées pour recevoir ou émettre des signaux à induction électrique en champ proche quasi-statique sans propagation.

**2.** Dispositif selon la revendication 1 :
la première surface comportant la première bobine inductive.

**3.** Dispositif selon la revendication 2 :
la première bobine inductive entourant géométriquement la deuxième bobine inductive.

**4.** Dispositif selon une quelconque revendication précédente :
la première surface comportant la première bobine inductive et la deuxième surface comportant la troisième bobine inductive étant configurées pour former une deuxième capacité (324).

**5.** Dispositif selon l'une quelconque des revendications précédentes :

la troisième bobine inductive comportant une deuxième extrémité ; et
la deuxième extrémité de la troisième bobine inductive étant ouverte électriquement.

**6.** Dispositif selon l'une des revendications 1 à 4 :

comprenant en outre une plaque conductrice (320) ;
la troisième bobine inductive comportant une deuxième extrémité ; et
la plaque conductrice étant couplée à la deuxième extrémité de la troisième bobine inductive.

**7.** Dispositif selon la revendication 6 :
la plaque conductrice étant couplée au côté opposé au dit côté du premier substrat.

**8.** Dispositif selon une quelconque revendication précédente :

la première bobine inductive et les connexions d'alimentation étant configurées pour transporter un courant ; et
le courant étant basé sur les signaux magnétiques en champ proche.

**9.** Dispositif selon une quelconque revendication précédente :

les deuxième et troisième bobines inductives étant configurées pour transporter une tension ; et
la tension étant basée sur les signaux électriques en champ proche.

**10.** Dispositif selon une quelconque revendication précédente :
les première, deuxième et troisième bobines inductives étant formées en une forme parmi : un cercle et/ou un rectangle et/ou un polygone et/ou un ovale et/ou un losange.

FIG. 1A

EP 3 866 345 B1

FIG. 1B

EP 3 866 345 B1

FIG. 2A

FIG. 2B

EP 3 866 345 B1

FIG. 3A

FIG. 3B

FIG. 3C

**FIG. 3D**

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10320086 B2
- US 2015318932 A1
- US 9941937 B1